# EUROPEAN PATENT SPECIFICATION

(11) **EP 3 848 269 B1**
(45) Date of publication and mention of the grant of the patent: **09.08.2023**
(21) Application number: 20747333.1
(22) Date of filing: 01.07.2020
(51) Int. Cl.: B61F 5/24, F16F 15/04

(54) **BOGIE FOR RUBBER-TIRED LIGHT RAIL VEHICLE**
DREHGESTELL FÜR EIN GUMMIBEREIFTES LEICHTES SCHIENENFAHRZEUG
BOGIE POUR TRAMWAY À PNEUS EN CAOUTCHOUC

(30) Priority: 29.11.2019 KR 20190157586
(43) Date of publication of application: 14.07.2021
(73) Proprietor: Korea Railroad Research Institute, Uiwang-si, Gyeonggi-do 16105 (KR)
(72) Inventor: KIM, Yeon-Su, Anyang-si, Gyeonggi-do 14102 (KR); PARK, Sung-Hyuk, Anyang-si, Gyeonggi-do 14102 (KR)
(74) Representative: Petraz, Gilberto Luigi
(86) International application number: PCT/KR2020/008593
(87) International publication number: WO 2021/107311

(56) References cited:
- EP-A2- 0 760 322
- JP-A- H0 781 561
- JP-A- H09 193 794
- JP-A- H11 321 635
- KR-A- 20050 050 953
- KR-A- 20130 016 428
- KR-A- 20130 123 559
- KR-B1- 101 364 703
- US-A- 3 905 278
- US-A1- 2005 087 098
- US-A1- 2012 097 065

## Description

### Technical Field

The present invention relates to a bogie for a rubber-tired light rail vehicle. More particularly, the present invention relates to a bogie for a rubber-tired light rail vehicle, the bogie including a return spring that is disposed between a frame thereof and a vehicle body for accommodating passengers and/or baggage and which exerts the same magnitude of force when compressed or stretched, thereby preventing a rubber-tired light rail vehicle from excessively turning at curves, improving riding quality by reducing vibration and shock attributable to the impact of lateral force, and improving stability of vehicle traveling on a railroad.

### Background Art

Generally, in the case of a rubber-tired light rail vehicle, two single-axle bogies support one railroad vehicle body from underneath.

The bogies travel on a concrete track or a rigid track with rubber-tire driving wheels and on guiding rails with rubber- or urethane-tire guiding wheels.

In terms of vibration, shock, a feeling of riding comfort, and the like that a passenger feels, there are many important considerations for the rubber-tired light rail vehicle. The considerations include wear and irregularity of traveling and guiding road surfaces, precision of construction, and route features including a distance between each of the stations, railway curves, railway junctions, and railway slopes.

Particularly, at curves and junctions, quick returning of rotational displacement of the bogie and the vehicle body to a normal state, quick reducing of vibration and shock between a guiding rail and a guiding wheel, and quick reducing of vibration and shock between the traveling road surface and the traveling wheel contribute greatly to reducing the vibration of the robber-wheeled railroad vehicle and improving a passenger's feeling of riding comfort.

In recent years, design technologies for the rubber-tired light rail vehicle have been recognized as significantly important, such as ones for increasing a transportation capacity by improving a maximum speed, for improving the passenger's feeling of riding comfort by reducing the vibration and shock occurring in a vehicle, and for improving maintenance by improving the durability of the bogie.

Particularly, for securing the stability of traveling, the passenger's convenience, and the like, it is important that the rubber-tired light rail vehicle, traveling on a route having many curved, branching, and inclined sections, restores rotational displacement between the bogie and the vehicle body quickly and stably to a normal state.

In addition, for securing the durability of the bogie, the passenger's convenience, and the like, it is important that the vibration and the shock occurring between the guiding rail and the guiding wheel are reduced.

Therefore, it is required to install a return spring (restoring spring) between the vehicle body and the bogie and to install a leftward-rightward shock absorber behind the guiding wheel in order to increase the transportation capacity by increasing a maximum speed of the rubber-tired light rail vehicle and to improve the feature of the vibration (the feeling of riding comfort) on the route having many curved, branching, and inclined sections.

A rotation control spring and a damper are installed between a bogie and a vehicle body for a rubber-tired light rail vehicle in the related art. However, the installed rotation control spring is a type of unidirectional coil spring of which a force is exerted only in one direction.

In addition, there has been no case where a leftward-rightward shock absorber for the guiding wheel is actually used.

For this reason, when the rubber-tired light rail vehicle travels in a curved, branching, or inclined section, the rotation control spring is compressed or decompressed according to a direction of rotation of the bogie with respect to the vehicle body, and thus different spring forces are exerted bidirectionally. Because of this structure, excessive rotational movement (yawing) can occur between the bogie and the vehicle body, and excessive guiding load can occur on the guiding wheel installed at a specific position. This phenomenon decreases the passenger's feeling of riding comfort or exerts an adverse effect on the vibration (dynamic behavior) of the vehicle.

The rotation control spring generates initial rotational displacement between the bogie and the vehicle body. Because of this, even when the rubber-tired light rail vehicle travels in a straight section, the traveling wheel (rubber tire) has an arbitrary steering angle, thereby causing one-sided wear of the tire and the like.

In addition, because a shock absorber that reduces the vibration and the shock between the guiding rail and the guiding wheel is not provided in the related art, when the rubber-tired light rail vehicle travels in the curved or branching section, vibration and shock in a horizontal direction, which is transferred to a guiding frame, decrease the passenger's feeling of riding comfort or exerts an adverse effect on the vibration (dynamic behavior) of the vehicle.

Document JP H11 321635 A describes a suspension device for guide track vehicle. Documents KR 2005 0050953 A and KR 101 364 703 B1 describe a guide frame structure of light rail vehicle.

### Disclosure

### Technical Problem

An objective of the present invention, which is contemplated to solve the problems described above, is to provide a bogie for a rubber-tired light rail vehicle that includes a return spring between a vehicle body and a bogie frame, with the same amount of force being applied to the return spring when the return spring is compressed or decompressed. Thus, when a rubber-tired light rail vehicle travels in a curved, branching, or inclined section, excessive rotational movement is prevented, and shock or vibration in a leftward-rightward direction is reduced, thereby preventing a decrease in a feeling of riding comfort and improving stability of vehicle traveling.

Another objective of the prevent invention is to provide a bogie for a rubber-tired light rail vehicle that has such a simple structure that a frictional force applied to a return spring when a rubber-tired light rail vehicle travels in a curved section can be stably reduced. Thus, not only can the durability of the bogie be increased, but also vibration can be reduced.

Still another objective of the present invention is to provide a bogie for a rubber-tired light rail vehicle that has such a simple structure that an inner constituent of a return string, when damaged, can be readily replaced.

### Technical Solution

According to an aspect of the present invention, there is provided a bogie for a rubber-tired light rail vehicle, the bogie including: a turning frame, installed on a bogie frame; and a return spring having a first end portion that is rotatably connected to the turning frame and a second end portion arranged to be fixed to a vehicle body, the return spring enabling relative rotation between the vehicle body and the bogie frame.

In the bogie, the return spring includes a piston unit, and first and second rod-end protrusions that are connected to both end portions, respectively, of the piston unit and are respectively connected to the turning frame and arranged to be connected to the vehicle body. Moreover, the first and second rod-end protrusions have threaded portions, respectively, on first sides thereof, the threaded portions resulting from threading respective outer circumferential surfaces, respectively, of the first and second rod-end protrusions, and the first and second rod-end protrusions may have through-holes, respectively, on second sides thereof, the through-holes being made in an upward-downward direction through the first and second rod-end protrusions, respectively.

In the bogie, the piston unit may include an outer pipe, a core bar provided inside the outer pipe, first and second sliders combined with both sides, respectively, of an outer circumferential surface of the core bar, a spring elastically supported between the first and second sliders, a screw rod combined with a first end portion of the core bar, an end plate combined with an end portion of the outer pipe on which the screw rod is provided, and an end block combined with a second end portion of the outer pipe, which has an empty space inside.

In the bogie, the first and second sliders may have the form of a pipe and may have respective stepped protrusions in an outward direction, and spring support rings on which the spring is supported protrude from the stepped protrusions, respectively, in the outward direction.

In the bogie, wear rings may be provided on respective inner circumferential surfaces, respectively, of the first and second sliders and on respective outer circumferential surfaces, respectively, of the spring support rings.

In the bogie, the first and second sliders may have lubrication holes, respectively.

In the bogie, the screw rod may have a combination ring on a first side thereof, the combination ring being screwed on a combination portion formed on the internal surface of the core bar, the screw rod may have a holding ring on a second side thereof, the holding ring having a threaded inner circumferential surface and the first rod-end protrusion being screwed into the holding ring, and the screw rod may have an outward-protruding protrusion in the center portion thereof, the protrusion being supported on the stepped protrusion of the first slider.

In the bogie, the core bar may have a flange on a second end portion thereof, the flange being supported on the stepped protrusion of the second slider.

In the bogie, a hinge pin may be inserted into the through-hole in the first rod-end protrusion in such a manner that the hinge pin is rotatably installed on the turning frame.

In the bogie, a fixation pin may be inserted into the through-hole in the second rod-end protrusion, and a bracket may be combined with the fixation pin and thus may be arranged to be installed on the vehicle body.

The bogie may further include a guide frame, installed on the bogie frame, and a leftward-rightward shock absorber, installed on the guide frame.

### Advantageous Effects

With a configuration according to the present invention, a return spring of which the same amount of force is exerted when the return spring is compressed or decompressed is provided between a vehicle body and a bogie frame. When a rubber-tired light rail vehicle travels in a curved, branching, or inclined section, excessive rotational movement is prevented, and shock or vibration in a leftward-rightward direction is reduced. This provides the advantage that a decrease in a feeling of riding comfort can be prevented and that stability of vehicle traveling can be improved.

In addition, according to the present invention, a simple structure stably reduces a frictional force that is applied to the return spring when the rubber-tired light rail vehicle travels in the curved section, and thus provides the advantage that not only can the durability of the traveling vehicle be increased, but also vibration can be reduced.

In addition, according to the present invention, the simple structure provides the advantage that an inner constituent of the return spring, when damaged, can be readily replaced.

### Description of Drawings

FIGS 1A and 1B are views each schematically illustrating a bogie for a rubber-tired light rail vehicle according to the present invention;
FIG. 2 is a view illustrating a return spring of the bogie for a rubber-tired light rail vehicle according to the present invention;
FIG. 3 is a view illustrating a portion installed in a vehicle body, of the return spring of the bogie for a rubber-tired light rail vehicle according to the present invention;
FIGS. 4A and 4B are views each illustrating an operating state in a straight section, of the bogie for a rubber-tired light rail vehicle according to the present invention;
FIGS. 5A and 5B are views each illustrating an operating state in a curved section, of the bogie for a rubber-tired light rail vehicle according to the present invention; and
FIGS. 6A and 6B are views each illustrating an operating state in the curved section, of the bogie for a rubber-tired light rail vehicle according to the present invention.

### Best Mode

### Mode for Invention

A preferable embodiment of the present invention will be described in more detail below with reference to the accompanying drawings. Like constituent elements in the drawings are given like reference characters, and the same respective descriptions thereof are omitted. It should be understood that the present invention may be implemented into many other embodiments and is not limited to the embodiment that will be described below.

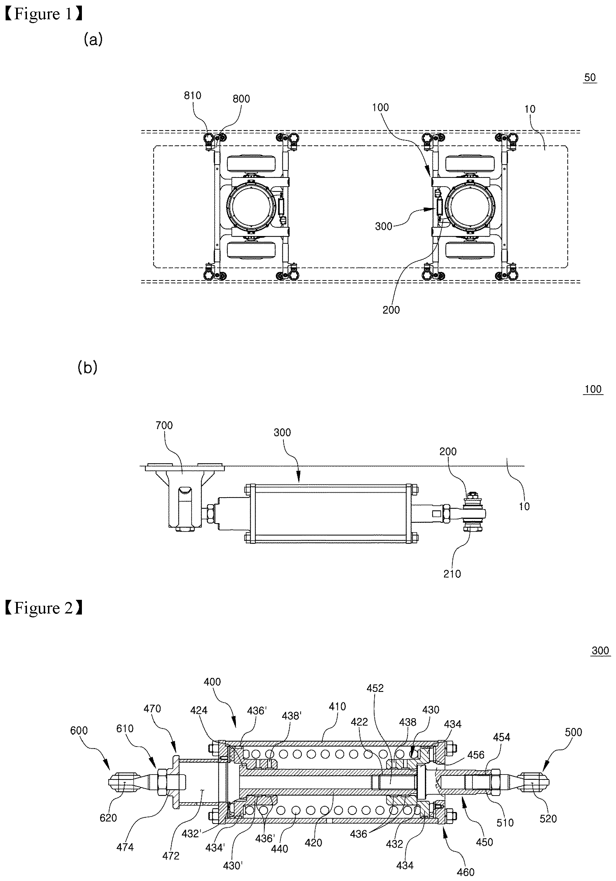

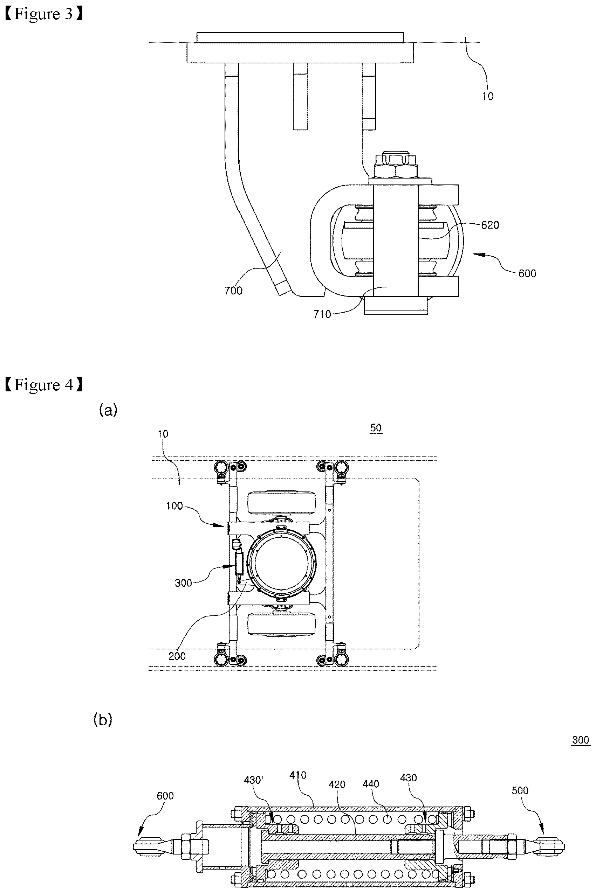

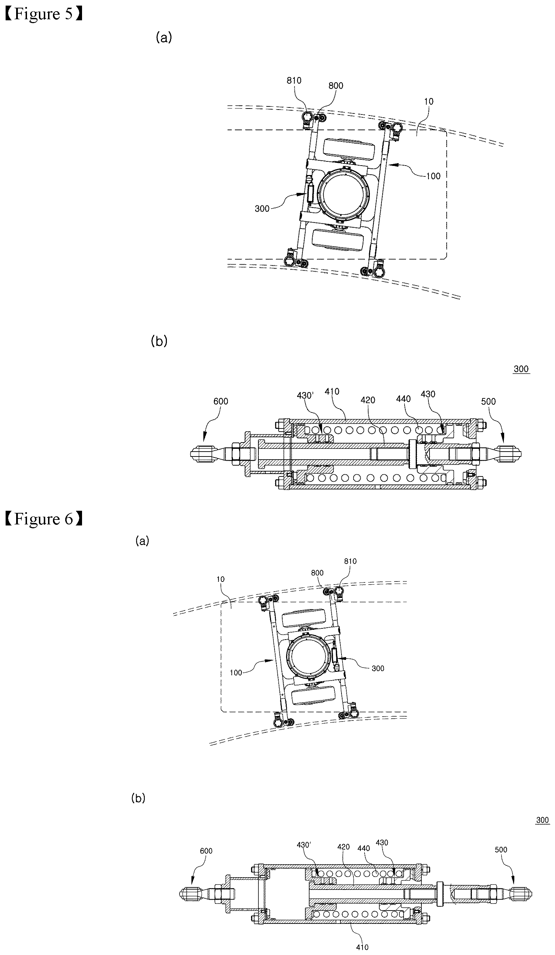

FIGS 1A and 1B are views each schematically illustrating a bogie for a rubber-tired light rail vehicle according to the present invention. FIG. 2 is a view illustrating a return spring of the bogie for a rubber-tired light rail vehicle according to the present invention. FIG. 3 is a view illustrating a portion installed in a vehicle body, of the return spring of the bogie for a rubber-tired light rail vehicle according to the present invention. FIGS. 4A and 4B are views each illustrating an operating state in a straight section, of the bogie for a rubber-tired light rail vehicle according to the present invention. FIGS. 5A and 5B are views each illustrating an operating state in a curved section, of the bogie for a rubber-tired light rail vehicle according to the present invention. FIGS. 6A and 6B are views each illustrating the operating state in the curved section, of the bogie for a rubber-tired light rail vehicle according to the present invention.

The present invention relates to a bogie 50 for a rubber-tired light rail vehicle that includes a return spring between a vehicle body and a bogie frame, with the same amount of force being exerted on the return spring when the return spring is compressed or decompressed. Thus, the bogie 50 is capable of preventing excessive rotational movement and reducing shock or vibration in a leftward-rightward direction when a rubber-tired light rail vehicle travels in a curved section. Thus, the decrease in the feeling of riding comfort can be prevented and stability of vehicle traveling can be improved. As illustrated in FIGS 1(a) and 1(b), the bogie 50 broadly includes a turning frame 200 and a return spring 300. The turning frame 200 is installed on a bogie frame 100. A first end portion of the return spring 300 is rotatably connected to the turning frame 200, and a second end portion of thereof is fixedly installed on a vehicle body 10.

More specifically, the turning frame 200 is installed in a manner that protrudes from one side of the bogie frame 100, and the return spring 300 is installed on the turning frame 200. Thus, rotational movement is caused to smoothly occur between the vehicle body 10 and the bogie frame 100.

On the other hand, the return spring 300 includes a piston unit 400 and first and second rod-end protrusions 500 and 600 that are connected to both end portions, respectively, of the piston unit 400 and thus are connected to the turning frame 200 and the vehicle body 10, respectively.

In this case, the piston unit 400 includes an outer pipe 410, and a core bar 420 is provided inside the outer pipe 410.

In addition, first and second sliders 430 and 430' that constitutes a pair are combined with both sides, respectively, of an outer circumferential surface of the core bar 420. A spring 440 is elastically supported between the first and second sliders 430 and 430'.

In this case, the first and second sliders 430 and 430' have the form of a pipe. The first and second sliders 430 and 430' have respective stepped protrusions 432 and 432' in an outward direction. Spring support rings 434 and 434' on which the spring 440 is supported protrude from the stepped protrusions 432 and 432', respectively, in the outward direction.

The core bar 420 has a flange 424 on a second end portion thereof with which the second slider 430' is combined. For combination, the flange 424 is nested on the stepped protrusion 432' of the second slider 430'. Thus, when the core bar 420 moves in a direction in which the first slider 430 is combined, the flange 424 moves the second slider 430' and thus presses against the spring 440.

In addition, a screw rod 450 is combined with a first end portion of the core bar 420, with which the first slider 430 is combined. The screw rod 450 has a combination ring 452 on a first side thereof. The combination ring 452 is screwed on a combination portion 422 formed on the internal surface of the core bar 420.

The screw rod 450 has a holding ring 454 on a second side thereof. The holding ring 454 has a threaded inner circumferential surface. The first rod-end protrusion 500 is screwed into the holding ring 454.

More specifically, the first rod-end protrusion 500 has a threaded portion 510. The threaded portion 510 results from threading an outer circumferential surface of the first rod-end protrusion 500. The threaded portion 510 is screwed into the holding ring 454.

The screw rod 450 has an outward-protruding protrusion 456 in the center portion thereof. For combination, the protrusion 456 is nested on the stepped protrusion 432 of the first slider 430. Thus, when the core bar 420 moves in a direction in which the second slider 430' is combined, the protrusion 456 moves the first slider 430 and presses against the spring 440.

On the other hand, a ring-shaped end plate 460 having a hollow center is installed on an end portion of the outer pipe 410, on which the first slider 430 is provided. With this configuration, the first slide 430 is prevented from deviating, and the screw rod 450 connected to the core bar 420 reciprocates smoothly.

In addition, an end block 470 is provided on an end portion of the outer pipe 410, on which the second slider 430' is provided. Thus, the core bar 420 and the second slider 430' are prevented from deviating, and an empty space 472 is formed in an inward direction. It is possible that the core bar 420 reciprocates in the empty space 472.

The end block 470 has a combination hole 474. For combination, the second rod-end protrusion 600 is inserted into the combination hole 474.

The second rod-end protrusion 600 has a threaded portion 610. The threaded portion 610 results from threading an outer circumferential surface of the second rod-end protrusion 600. The threaded portion 610 is screwed into the combination hole 474.

With fastening means such as a bolt and nut, the end plate 460 and the end block 470 are fixedly installed on the outer pipe 410. With this configuration, constituents, such as the core bar 420, the first and second sliders 430 and 430', and the spring 440, which are provided inside the outer pipe 410, are readily replaced when damaged.

On the other hand, the first rod-end protrusion 500 has a through-hole 520 in one side thereof. A hinge pin 210 is inserted into the through-hole 520 in such a manner that the hinge pin 210 is installed on the turning frame 200. Thus, the return spring 300 is installed in a manner that is rotatable with respect to the turning frame 200.

In addition, the second rod-end protrusion 600 has a through-hole 620 in one side thereof. A fixation pin 710 is inserted into the through-hole 620 in such a manner that a bracket 700 for connecting the return spring 300 to the vehicle body 10 is provided. The fixation pin 710 is fixedly installed on the bracket 700.

With the configuration as described above, as illustrated in FIGS. 4(a) and 4(b), in a case where the vehicle travels in the straight section, the vehicle body 10 and the bogie frame 100 are in a state of being in parallel with each other. Furthermore, constituents, such as the core bar 420 and the first and second sliders 430 and 430', are positioned at their respective regular positions inside the return spring 300.

In contrast, when the vehicle travels in the curved section, the bogie frame 100 rotates with respect to the vehicle body 10, and the return spring 300 is accordingly compressed or decompressed. Thus, the bogie frame 100 is caused to rotate in a certain section. This improves the feeling of riding comfort and the stability of vehicle traveling.

As illustrated in FIGS. 5(a) and 5(b), while the bogie frame 100 rotates with respect to the vehicle body 10, the first rod-end protrusion 500 connected to the turning frame 200 moves the first slider 430 and the core bar 420 toward the second rod-end protrusion 600, and the first slider 430 presses against the spring 440. The spring 440 is accordingly compressed.

At this time, the pressing of the second slider 430' by the spring 440 keeps the second slider 430' fixed at its regular position. The second end portion of the core bar 420 is positioned within the empty space 472 in the end block 470. Thus, the return spring 300 is compressed, thereby generating a certain restoring force and improving the feeling of riding comfort and the stability of vehicle traveling.

In addition, as illustrated in FIGS. 6(a) and 6(b), while the bogie frame 100 rotates with respect to the vehicle body 10, when the first rod-end protrusion 500 connected to the turning frame 200 moves the core bar 420 and the second slider 430' toward the turning frame 200, the second slider 430' presses against the spring 440. Thus, the spring 440 is compressed, and the return spring 300 is decompressed. A certain restoring force is accordingly generated, and thus the feeling of riding comfort and the stability of vehicle traveling are improved.

On the other hand, wear rings 436 and 436' are provided on respective inner circumferential surfaces, respectively, of the first and second sliders 430 and 430', which are in contact with the core bar 420, and on respective outer circumferential surfaces, respectively, of the spring support rings 434 and 434', which are in contact with the outer pipe 410. The wear rings 436 and 436' reduce friction between the core bar 420 and the outer pipe 410 and make it possible for the first and second sliders 430 and 430' to move smoothly.

In addition, the first and second sliders 430 and 430' have respective lubrication holes 438 and 438' in portions, respectively, of the inner circumferential surface thereof that is in contact with the core bar 420. The portions of the inner circumferential surface correspond to the wear rings 436 and 436', respectively. Through the lubrication holes 438 and 438', lubrication oil is continuously supplied between each of the first and second sliders 430 and 430' and the core bar 420, thereby stably reducing a frictional force. This provides the advantages that the durability of the bogie can be increased and that vibration can be reduced.

On the other hand, a guide frame 800 is installed on the bogie frame 100, and a leftward-rightward shock absorber 810 is provided on the guide frame 800. Thus, when the vehicle drives in the curved section, the left and right sides of the vehicle are supported by the leftward-rightward shock absorber 810. Shock and vibration are accordingly reduced that are applied to the vehicle. This provides the advantages that the decrease in the feeling of riding comfort can be prevented and that the stability of vehicle traveling can be improved.

The bogie 50 for a rubber-tired light rail vehicle according to the present invention includes the return spring 300 between the vehicle body 10 and the bogie frame 100, with the same amount of force being applied to the return spring 300 when the return spring 300 is compressed or decompressed. Thus, when the rubber-tired light rail vehicle travels in the curved section, excessive rotational movement can be prevented and the shock or vibration in the leftward-rightward direction can be reduced. As a result, the decrease in the feeling of riding comfort can be prevented and the stability of vehicle traveling can be improved. The bogie 50 has such a simple structure that a frictional force that is applied to the return spring 300 when traveling in the curved section can be stably reduced. Thus, not only can the durability of the bogie be increased, but also the vibration can be reduced. Furthermore, a constituent within the return spring 300, when damaged, can be readily replaced.

The scope of the present invention is not limited to the above-described preferable embodiment of the present invention. It would be apparent to a person of ordinary skill in the art to which the present invention pertains that various modifications to the embodiment are possibly carried out within the scope of the invention as defined in the appended claims.

### Industrial Applicability

The present invention relates to a bogie for a rubber-tired light rail vehicle. More particularly, the present invention relates to a bogie for a rubber-tired light rail vehicle that includes a return spring between a vehicle body accommodating a passenger and/or baggage and a bogie frame, with the same amount of force being applied to the return spring when the return spring is compressed or decompressed. Thus, when a rubber-tired light rail vehicle travels in a curved section, excessive rotational movement of the bogie is prevented, and shock or vibration in a leftward-rightward direction is reduced, thereby preventing a decrease in a feeling of riding comfort and improving stability of vehicle traveling.

## Claims

1. A bogie (50) for a rubber-tired light rail vehicle, the bogie comprising:
a turning frame (200) installed on a bogie frame (100);
a return spring (300) having a first end portion that is rotatably connected to the turning frame (200) and a second end portion arranged to be fixed to a vehicle body (10), the return spring (300) enabling relative rotation between the vehicle body (10) and the bogie frame (100);
**characterized in that**
the return spring (300) comprises:
a piston unit (400); and
first and second rod-end protrusions (500) and (600) that are connected to both end portions, respectively, of the piston unit (400) and are respectively connected to the turning frame (200) and arranged to be connected to the vehicle body (10);
wherein the first and second rod-end protrusions (500) and (600) have threaded portions (510) and (610), respectively, on first sides thereof, the threaded portions (510) and (610) resulting from threading respective outer circumferential surfaces, respectively, of the first and second rod-end protrusions (500) and (600), and
the first and second rod-end protrusions (500) and (600) have through-holes (520) and (620), respectively, on second sides thereof, the through-holes (520) and (620) being made in an upward-downward direction through the first and second rod-end protrusions (500) and (600), respectively.

2. The bogie (50) according to claim 1, wherein the piston unit (400) comprises:
an outer pipe (410);
a core bar (420) provided inside the outer pipe (410);
first and second sliders (430) and (430') combined with both sides, respectively, of an outer circumferential surface of the core bar (420);
a spring (440) elastically supported between the first and second sliders (430) and (430');
a screw rod (450) combined with a first end portion of the core bar (420);
an end plate (460) combined with an end portion of the outer pipe (410) on which the screw rod (450) is provided; and
an end block (470) combined with a second end portion of the outer pipe (410), which has an empty space (472) inside.

3. The bogie (50) according to claim 2, wherein the first and second sliders (430) and (430') have the form of a pipe and have respective stepped protrusions (432) and (432') in an outward direction, and
spring support rings (434) and (434') on which the spring (440) is supported protrude from the stepped protrusions (432) and (432'), respectively, in the outward direction.

4. The bogie (50) according to claim 3, wherein wear rings (436) and (436') are provided on respective inner circumferential surfaces, respectively, of the first and second sliders (430) and (430') and on respective outer circumferential surfaces, respectively, of the spring support rings (434) and (434').

5. The bogie (50) according to claim 4, wherein the first and second sliders (430) and (430') have lubrication holes (438) and (438'), respectively.

6. The bogie (50) according to claim 3, wherein the screw rod (450) has a combination ring (452) on a first side thereof, the combination ring (452) being screwed on a combination portion (422) formed in the internal surface of the core bar (420),
the screw rod (450) has a holding ring (454) on a second side thereof, the holding ring (454) having a threaded inner circumferential surface and the first rod-end protrusion (500) being screwed into the holding ring (454), and
the screw rod (450) has an outward-protruding protrusion (456) in the center portion thereof, the protrusion (456) being supported on the stepped protrusion (432) of the first slider (430) .

7. The bogie (50) according to claim 3, wherein the core bar (420) has a flange (424) on a second end portion thereof, the flange (424) being supported on the stepped protrusion (432') of the second slider (430') .

8. The bogie (50) according to claim 1, wherein a hinge pin (210) is inserted into the through-hole (520) in the first rod-end protrusion (500) in such a manner that the hinge pin (210) is rotatably installed on the turning frame (200).

9. The bogie (50) according to claim 1, wherein a fixation pin (710) is inserted into the through-hole (620) in the second rod-end protrusion (600), and a bracket (700) is combined with the fixation pin (710) and thus arranged to be installed on the vehicle body (10).

10. The bogie (50) according to claim 1, further comprising:
a guide frame (800), installed on the bogie frame (100); and
a leftward-rightward shock absorber (810) installed on the guide frame (800).

## Patentansprüche

1. Laufdrehgestell (50) für ein gummibereiftes leichtes Schienenfahrzeug, wobei das Laufdrehgestell aufweist:
einen Drehrahmen (200), der an einem Laufdrehgestell-Rahmen (100) installiert ist,
eine Rückstellfeder (300), die einen ersten Endabschnitt, der mit dem Drehrahmen (200) drehbar verbunden ist, und einen zweiten Endabschnitt hat, der eingerichtet ist, um an einer Fahrzeugkarosserie (10) befestigt zu werden, wobei die Rückstellfeder (300) eine Relativrotation zwischen der Fahrzeugkarosserie (10) und dem Laufdrehgestell-Rahmen (100) ermöglicht,
**dadurch gekennzeichnet, dass**
die Rückstellfeder (300) aufweist:
eine Kolbeneinheit (400) und
einen ersten und einen zweiten Stangenende-Vorsprung (500) und (600), die jeweils zugeordnet mit beiden Endabschnitten der Kolbeneinheit (400) verbunden sind und jeweils mit dem Drehrahmen (200) verbunden sind und eingerichtet sind, um mit der Fahrzeugkarosserie (10) verbunden zu werden,
wobei der erste und der zweite Stangenende-Vorsprung (500) und (600) jeweils zugeordnet Gewindeabschnitte (510) und (610) auf ersten Seiten davon haben, wobei die Gewindeabschnitte (510) und (610) aus einem Gewindeerstellen an jeweils zugeordneten Außenumfangsflächen des ersten und des zweiten Stangenende-Vorsprungs (500) und (600) resultieren, und
wobei der erste und der zweite Stangenende-Vorsprung (500) und (600) jeweils zugeordnet Durchgangslöcher (520) und (620) auf zweiten Seiten davon haben, wobei die Durchgangslöcher (520) und (620) jeweils zugeordnet in einer aufwärts-abwärts-Richtung durch den ersten und den zweiten Stangenende-Vorsprung (500) und (600) hindurch gebildet sind.

2. Laufdrehgestell (50) gemäß Anspruch 1, wobei die Kolbeneinheit (400) aufweist:
ein Außenrohr (410),
eine Kernstange (420), die in dem Außenrohr (410) bereitgestellt ist, einen ersten und einen zweiten Schlitten (430) und (430'), die jeweils zugeordnet mit beiden Seiten einer Außenumfangsfläche der Kernstange (420) gekoppelt sind,
eine Feder (440), die elastisch zwischen den ersten und den zweiten Schlitten (430) und (430`) geschaltet ist,
eine Schraubstange (450), die mit einem ersten Endabschnitt der Kernstange (420) gekoppelt ist,
eine Endplatte (460), die mit einem Endabschnitt des Außenrohrs (410) gekoppelt ist, an dem die Schraubstange (450) bereitgestellt ist, und einen Endblock (470), der mit einem zweiten Endabschnitt des Außenrohrs (410) gekoppelt ist und der im Inneren einen Leerraum (472) hat.

3. Laufdrehgestell (50) gemäß Anspruch 2, wobei der erste und der zweite Schlitten (430) und (430') die Form eines Rohrs haben und jeweils zugeordnet gestufte Vorsprünge (432) und (432') in einer nach-außen-Richtung haben, und wobei
Federstützringe (434) und (434'), an denen die Feder (440) gestützt ist, jeweils zugeordnet von den gestuften Vorsprüngen (432) und (432') in einer nach-außen-Richtung vorstehen.

4. Laufdrehgestell (50) gemäß Anspruch 3, wobei Verschleißringe (436) und (436') jeweils zugeordnet an jeweiligen Innenumfangsflächen des ersten und des zweiten Schlittens (430) und (430') und jeweils zugeordnet an jeweiligen Außenumfangsflächen der Federstützringe (434) und (434') bereitgestellt sind.

5. Laufdrehgestell (50) gemäß Anspruch 4, wobei der erste und der zweite Schlitten (430) und (430`) jeweils zugeordnet Schmierlöcher (438) und (438') haben.

6. Laufdrehgestell (50) gemäß Anspruch 3, wobei die Schraubstange (450) einen Kopplungsring (452) auf einer ersten Seite davon hat, wobei der Kopplungsring (452) auf einen Kopplungsabschnitt (422) geschraubt ist, der in der Innenfläche der Kernstange (420) gebildet ist,
wobei die Schraubstange (450) einen Haltering (454) an einer zweiten Seite davon hat, wobei der Haltering (454) eine mit einem Gewinde versehene Innenumfangsfläche hat und der erste Stangenende-Vorsprung (500) in den Haltering (454) geschraubt ist, und wobei
die Schraubstange (450) einen nach-außen-vorstehenden Vorsprung (456) in einem Mittelabschnitt davon hat, wobei der Vorsprung (456) an dem gestuften Vorsprung (432) des ersten Schlittens (430) abgestützt ist.

7. Laufdrehgestell (50) gemäß Anspruch 3, wobei die Kernstange (420) einen Flansch (424) an einem zweiten Endabschnitt davon hat, wobei der Flansch (424) an dem gestuften Vorsprung (432') des zweiten Schlittens (430') abgestützt ist.

8. Laufdrehgestell (50) gemäß Anspruch 1, wobei ein Gelenkzapfen (210) in das Durchgangsloch (520) im ersten Stangenende-Vorsprung (500) in einer solchen Weise eingesetzt ist, dass der Gelenkzapfen (210) drehbar an dem Drehrahmen (200) installiert ist.

9. Laufdrehgestell (50) gemäß Anspruch 1, wobei ein Fixierzapfen (710) in das Durchgangsloch (620) in dem zweiten Stangenende-Vorsprung (600) eingesetzt ist, und wobei
ein Halter (700) mit dem Fixierzapfen (710) gekoppelt ist und dadurch eingerichtet ist, um an der Fahrzeugkarosserie (10) installiert zu werden.

10. Laufdrehgestell (50) gemäß Anspruch 1, ferner aufweisend:
einen Führungsrahmen (800), der an dem Laufdrehgestell-Rahmen (100) installiert ist, und
einen links-rechts-Stoßabsorber (810), der an dem Führungsrahmen (800) installiert ist.

## Revendications

1. Bogie (50) pour un véhicule ferroviaire léger à pneumatiques en caoutchouc, le bogie comprenant :
un châssis tournant (200) installé sur un châssis de bogie (100) ;
un ressort de rappel (300) présentant une première partie d'extrémité qui est reliée de manière rotative au châssis tournant (200) et une seconde partie d'extrémité agencée pour être fixée à une carrosserie de véhicule (10), le ressort de rappel (300) permettant une rotation relative entre la carrosserie de véhicule (10) et le châssis de bogie (100) ;
**caractérisé en ce que**
le ressort de rappel (300) comprend :
une unité de piston (400) ; et
des première et seconde saillies d'extrémité de tige (500) et (600) qui sont reliées aux deux parties d'extrémité, respectivement, de l'unité de piston (400) et sont respectivement reliées au châssis tournant (200) et agencées pour être reliées à la carrosserie de véhicule (10) ;
dans lequel les première et seconde saillies d'extrémité de tige (500) et (600) présentent des parties filetées (510) et (610), respectivement, sur des premiers côtés de celles-ci, les parties filetées (510) et (610) résultant du filetage de surfaces circonférentielles extérieures respectives, respectivement, des première et seconde saillies d'extrémité de tige (500) et (600), et
les première et seconde saillies d'extrémité de tige (500) et (600) présentent des trous traversants (520) et (620), respectivement, sur des seconds côtés de celles-ci, les trous traversants (520) et (620) étant réalisés dans une direction haut-bas à travers les première et seconde saillies d'extrémité de tige (500) et (600), respectivement.

2. Bogie (50) selon la revendication 1, dans lequel l'unité de piston (400) comprend :
un tuyau extérieur (410) ;
une barre centrale (420) prévue à l'intérieur du tuyau extérieur (410) ;
des premier et second coulisseaux (430) et (430') combinés avec les deux côtés, respectivement, d'une surface circonférentielle extérieure de la barre centrale (420) ;
un ressort (440) supporté de manière élastique entre les premier et second coulisseaux (430) et (430') ;
une tige de vis (450) combinée avec une première partie d'extrémité de la barre centrale (420) ;
une plaque d'extrémité (460) combinée avec une partie d'extrémité du tuyau extérieur (410) sur laquelle la tige de vis (450) est prévue ; et
un bloc d'extrémité (470) combiné avec une seconde partie d'extrémité du tuyau extérieur (410), qui présente un espace vide (472) en son sein.

3. Bogie (50) selon la revendication 2, dans lequel les premier et second coulisseaux (430) et (430') présentent la forme d'un tuyau et présentent des saillies étagées respectives (432) et (432') dans une direction vers l'extérieur, et
des anneaux de support de ressort (434) et (434') sur lesquels le ressort (440) est supporté font saillie à partir des saillies étagées (432) et (432'), respectivement, dans la direction vers l'extérieur.

4. Bogie (50) selon la revendication 3, dans lequel des anneaux d'usure (436) et (436') sont prévues sur des surfaces circonférentielles intérieures respectives, respectivement, des premier et second coulisseaux (430) et (430') et sur des surfaces circonférentielles extérieures respectives, respectivement, des anneaux de support de ressort (434) et (434').

5. Bogie (50) selon la revendication 4, dans lequel les premier et second coulisseaux (430) et (430') présentent des trous de lubrification (438) et (438'), respectivement.

6. Bogie (50) selon la revendication 3, dans lequel la tige de vis (450) présente un anneau de combinaison (452) sur un premier côté de celle-ci, l'anneau de combinaison (452) étant vissé sur une partie de combinaison (422) formée dans la surface intérieure de la barre centrale (420),
la tige de vis (450) présente un anneau de maintien (454) sur un second côté de celle-ci, l'anneau de maintien (454) présentant une surface circonférentielle intérieure filetée et la première saillie d'extrémité de tige (500) étant vissée dans l'anneau de maintien (454), et
la tige de vis (450) présente une saillie (456) faisant saillie vers l'extérieur dans sa partie centrale, la saillie (456) étant supportée sur la saillie étagée (432) du premier coulisseau (430).

7. Bogie (50) selon la revendication 3, dans lequel la barre centrale (420) présente une bride (424) sur une seconde partie d'extrémité de celle-ci, la bride (424) étant supportée sur la saillie étagée (432') du second coulisseau (430').

8. Bogie (50) selon la revendication 1, dans lequel un axe d'articulation (210) est inséré dans le trou traversant (520) dans la première saillie d'extrémité de tige (500) de sorte que l'axe d'articulation (210) est installé de manière rotative sur le châssis tournant (200).

9. Bogie (50) selon la revendication 1, dans lequel une broche de fixation (710) est insérée dans le trou traversant (620) dans la seconde saillie d'extrémité de tige (600), et
un support (700) est combiné à la broche de fixation (710) et est ainsi agencé pour être installé sur la carrosserie de véhicule (10).

10. Bogie (50) selon la revendication 1, comprenant en outre :
un châssis de guidage (800), installé sur le châssis de bogie (100) ; et
un amortisseur gauche-droite (810) installé sur le châssis de guidage (800).
